# EUROPÄISCHE PATENTSCHRIFT

(11) **EP 3 215 326 B1**
(45) Veröffentlichungstag und Bekanntmachung des Hinweises auf die Patenterteilung: **04.09.2019**
(21) Anmeldenummer: 15791284.1
(22) Anmeldetag: 03.11.2015
(51) Int. Cl.: B27M 1/08, B23Q 1/66, B23Q 7/04, B23Q 7/08

(54) **BEARBEITUNGSVORRICHTUNG FÜR WERKSTÜCKE UND VERFAHREN HIERFÜR**
MACHINING DEVICE FOR WORKPIECES AND METHOD THEREFOR
DISPOSITIF D'USINAGE POUR PIÈCES ET PROCÉDÉ POUR LEDIT DISPOSITIF

(30) Priorität: 03.11.2014 DE 102014222422
(43) Veröffentlichungstag der Anmeldung: 13.09.2017
(73) Patentinhaber: HOMAG GmbH, 72296 Schopfloch (DE)
(72) Erfinder: SCHMIEDER, Volker, 72116 Mössingen (DE); FRIESE, Stefan, 72285 Pfalzgrafenweiler (DE); STURM, Christian, 72172 Sulz/Neckar (DE)
(74) Vertreter: Grauel, Andreas
(86) Internationale Anmeldenummer: PCT/EP2015/075599
(87) Internationale Veröffentlichungsnummer: WO 2016/071337

(56) Entgegenhaltungen:
- EP-A1- 1 479 477
- EP-A1- 1 600 254
- EP-A1- 1 810 803
- EP-A2- 0 922 547
- EP-A2- 2 067 586
- WO-A1-2010/136941
- WO-A1-2016/045968
- DE-A1- 10 137 839
- IT-A1- PC20 110 018
- US-A- 3 215 175

## Beschreibung

### Technisches Gebiet

Die Erfindung betrifft eine Bearbeitungsvorrichtung für Werkstücke, insbesondere aus Holz, Kunststoff oder dergleichen nach dem Oberbegriff von Anspruch 1, und ein Verfahren zum Betreiben einer solchen Bearbeitungsvorrichtung.

### Stand der Technik

Bearbeitungsvorrichtungen für Werkstücke, insbesondere aus Holz, Kunststoff oder dergleichen, sind im Stand der Technik vielfältig bekannt geworden. Solche Bearbeitungsvorrichtungen dienen beispielsweise dazu, Werkstücke aus Holz, Holzersatzstoffen, Kunststoff oder dergleichen zu verarbeiten, in dem das Werkstück an seinen Längs- und/oder Schmalseiten auf Maß abgelängt und konturiert wird. Auch kann das Werkstück an vorgesehenen Positionen beispielsweise mit Bohrungen etc. versehen werden. Solche Werkstücke sind beispielsweise als Bauteile für Fenster oder Türen etc. verwendbar.

Die DE 101 37 839 A1 offenbart eine Bearbeitungsvorrichtung, bei welcher zwei sich gegenüberliegende in Längsrichtung verfahrbare Werkstücktische mit jeweils einer Spannvorrichtung zum Spannen eines Werkstücks vorgesehen sind, welche so ausgerichtet sind, dass sie abwechselnd ein gleiches Werkstück spannen und verlagern können, um das Werkstück an seinen jeweiligen Längsseiten und an den Schmalseiten bearbeiten zu können. Dabei wird das Werkstück erst in einer Spannvorrichtung eines verfahrbaren Werkstücktischs eingespannt und an einer Längsseite bearbeitet, anschließend wird das Werkstück in die Spannvorrichtung des anderen Werkstücktischs umgespannt und anschließend an der anderen Längsseite bearbeitet. Dadurch wird die Einspannung in beiden Werkstücktischen benötigt, um das Werkstück vollständig bearbeiten zu können.

Dies erhöht die Taktzeit und erhöht somit die Herstellkosten pro Werkstück.

### Darstellung der Erfindung, Aufgabe, Lösung, Vorteile

Es ist die Aufgabe der Erfindung, eine Bearbeitungsvorrichtung für Werkstücke zu schaffen, welche eine erhöhte Produktivität aufweist und dennoch einfach aufgebaut ist.

Diese Aufgabe bezüglich der Bearbeitungsvorrichtung wird mit den Merkmalen von Anspruch 1 gelöst.

Auch ist es vorteilhaft, wenn ein zweites Werkzeugelement vorgesehen ist, welches an dem Führungselement verlagerbar angeordnet ist, zum Bearbeiten des Werkstücks. Dadurch können auch zwei Werkstücke zeitparallel bearbeitet werden. Dies reduziert ebenso die effektive Taktzeit.

Weiterhin ist es vorteilhaft, wenn das erste Werkzeugelement und das zweite Werkzeugelement in Längsrichtung beabstandet voneinander an dem Führungselement verlagerbar geführt sind. Dadurch können das erste und das zweite Werkzeugelement unabhängig voneinander an dem Führungselement angeordnet und verlagert werden, so dass insbesondere bei jeglichen Verfahrbewegungen der beiden Werkzeugelemente eine Kollision dieser Werkzeugelemente vermieden wird.

Auch ist es besonders zweckmäßig, wenn das erste Werkzeugelement und das zweite Werkzeugelement in Längsrichtung auf gleicher Höhe an dem Führungselement verlagerbar geführt sind. Mit einer Kollisionskontrolle wird dabei ebenso die Kollision vermieden und die Werkzeugelemente können für den Bedarf der Bearbeitung des jeweiligen Werkstücks entsprechend verfahren werden.

Vorteilhaft ist es, wenn das Führungselement ein Portal oder ein Ausleger ist, an welchem das erste und/oder das zweite Werkzeugelement verlagerbar geführt sind. Dadurch kann das jeweilige Werkzeugelement sicher geführt werden, wobei die Werkstücke insbesondere unter dem Ausleger bzw. durch das Portal geführt werden, um sie bearbeiten zu können.

Auch ist es besonders vorteilhaft, wenn die erste Manipuliervorrichtung derart ausgestaltet ist, dass mittels ihr ein Werkstück von einer Werkstückzuführung aufnehmbar ist und einem der Werkstücktische in eine Einspannposition in zumindest ein Spannelement zuführbar ist, oder dass mittels ihr ein Werkstück aus einer ersten Einspannposition in zumindest einem ersten Spannelement in eine zweite Einspannposition in zumindest einem zweiten Spannelement umsetzbar ist, oder mittels ihr ein Werkstück von einer Einspannposition in zumindest einem Spannelement zu einer Werkstückabführung ausführbar ist. So kann die erste Manipuliervorrichtung beispielsweise mit einem gelenkigen Greifer ausgebildet sein, um die jeweiligen Verlagerungsprozesse durchführen zu können. Dabei kann ein erstes Spannelement unabhängig von einem zweiten Spannelement betätigbar sein oder alternativ kann ein erstes Spannelement mit einem zweiten Spannelement gekoppelt werden, so dass sie beide gemeinsam betätigbar sind. Bevorzugt weisen die Spannelemente jeweils in entgegengesetzte Richtungen, um die Aufnahmen für das Werkzeug gegenüberliegend mit entgegengesetzten Aufnahmeöffnungen auszubilden.

Auch ist es vorteilhaft, wenn die erste Manipuliervorrichtung derart ausgestaltet ist, dass mittels ihr ein Werkstück zu zumindest einem Werkzeugelement zur Bearbeitung des Werkstücks zuführbar ist. Dadurch kann beispielsweise mittels eines zusätzlichen Werkzeugaggregats, welches beispielsweise nicht an der Führungsvorrichtung verlagerbar angeordnet ist, eine zusätzliche Bearbeitung durchgeführt werden.

Erfindungsgemäß ist es weiterhin vorteilhaft, wenn ein viertes Werkzeugelement vorgesehen ist, welches an dem zweiten Führungselement verlagerbar angeordnet ist, zum Bearbeiten des Werkstücks. Dies erhöht weiterhin die Effektivität der Bearbeitung von Werkstücken.

Auch ist es vorteilhaft, wenn das dritte Werkzeugelement und das vierte Werkzeugelement in Längsrichtung beabstandet voneinander an dem zweiten Führungselement verlagerbar geführt sind. Dadurch wird wieder eine kollisionsfreie Verfahrbarkeit der dritten und vierten Werkzeugelemente bei der Bearbeitung der Werkstücke erreicht.

Auch ist es vorteilhaft, wenn das dritte Werkzeugelement und das vierte Werkzeugelement in Längsrichtung beabstandet voneinander an dem Führungselement verlagerbar geführt sind.

Besonders vorteilhaft ist es, wenn das zweite Führungselement ein Portal oder ein Ausleger ist, an welchem das dritte und/oder das vierte Werkzeugelement verlagerbar geführt sind.

Auch ist es besonders vorteilhaft, wenn die zweite Manipuliervorrichtung derart ausgestaltet ist, dass mittels ihr ein Werkstück von einer Werkstückzuführung aufnehmbar ist und einem der dritten und vierten Werkstücktische in eine Einspannposition in zumindest ein Spannelement zuführbar ist, oder dass mittels ihr ein Werkstück aus einer ersten Einspannposition in zumindest einem ersten Spannelement in eine zweite Einspannposition in zumindest einem zweiten Spannelement umsetzbar ist, oder mittels ihr ein Werkstück von einer Einspannposition in zumindest einem Spannelement zu einer Werkstückabführung ausführbar ist.

Besonders vorteilhaft ist es, wenn eine dritte Manipuliervorrichtung vorgesehen ist, welche derart ausgestaltet ist, dass mittels ihr ein Werkstück von einem der ersten oder zweiten Werkstücktische zu einem der dritten oder vierten Werkstücktische zuführbar ist oder dass mittels ihr ein Werkstück von einem der dritten oder vierten Werkstücktische zu einem der zweiten oder dritten Werkstücktische zuführbar ist, oder dass mittels ihr ein Werkstück aus einer ersten Einspannposition in zumindest einem ersten Spannelement in eine zweite Einspannposition in zumindest einem zweiten Spannelement umsetzbar ist, oder mittels ihr ein Werkstück von einer Einspannposition in zumindest einem Spannelement zu einer Werkstückabführung ausführbar ist. Dadurch können Werkstücke zwischen dem ersten bzw. zweiten Werkstücktisch und dem dritten bzw. vierten Werkstücktisch umgesetzt werden, was die Effektivität der Bearbeitung weiter erhöht.

Auch ist es besonders vorteilhaft, wenn die Werkstückabführung eine Rutsche für das Werkstück enthält, auf welche ein Werkstück absetzbar ist, so dass es abgeführt wird. Dadurch wird erreicht, dass zum Abführen eines bearbeiteten Werkstücks kein beweglicher Greifer vorgesehen werden muss, sondern das Werkstück aus der Einspannposition von zumindest einem Spannelement herausfallen kann und über die Rutsche abgeführt wird.

Die Aufgabe bezüglich des Verfahrens wird mit den Merkmalen von Anspruch 14 gelöst.

Ein Ausführungsbeispiel der Erfindung betrifft ein Verfahren zum Betreiben einer Bearbeitungsvorrichtung, insbesondere zum Bearbeiten eines Werkstücks, wobei ein Werkstück in einer Einspannposition von einem der Werkstücktische von einem Werkzeugelement bearbeitbar ist, wobei im Wesentlichen zeitgleich dazu ein weiteres Werkstück von einer Manipuliervorrichtung aus einem der Werkstücktische entnehmbar oder einem der Werkstücktische zuführbar oder in einem der Werkstücktische von einer Einspannposition in eine andere Einspannposition umsetzbar ist oder von einem der Werkstücktische von einer Einspannposition in eine andere Einspannposition eines anderen Werkstücktisches umsetzbar ist oder ein weiteres Werkstück in einer Einspannposition eines der anderen Werkstücktische mittels eines anderen Werkzeugelements bearbeitbar ist. Dadurch wird eine erhöhte Effektivität erreicht.

Gemäß der Erfindung erfolgt mit einer Bearbeitungsvorrichtung eine spanende Bearbeitung des Werkstücks in dessen Längsrichtung, wobei dieser Bearbeitungsprozess vorteilhaft in seiner vollständigen Längsrichtung im Durchlauf erfolgen kann. Dabei wird also eine vorteilhaft einseitige oder beidseitige Längsprofilierung des Werkstücks bewirkt.

### Kurze Beschreibung der Figuren

- Fig. 1: in schematischer Weise ein Ausführungsbeispiel einer Bearbeitungsvorrichtung für Werkstücke,
- Fig. 2: in schematischer Weise ein zweites Ausführungsbeispiel einer Bearbeitungsvorrichtung für Werkstücke,
- Fig. 3: in schematischer Weise ein drittes Ausführungsbeispiel einer erfindungsgemäßen Bearbeitungsvorrichtung für Werkstücke, und
- Fig. 4: in schematischer Weise ein Element zum Ausschleusen eines Werkstücks nach einer erfolgten Bearbeitung.

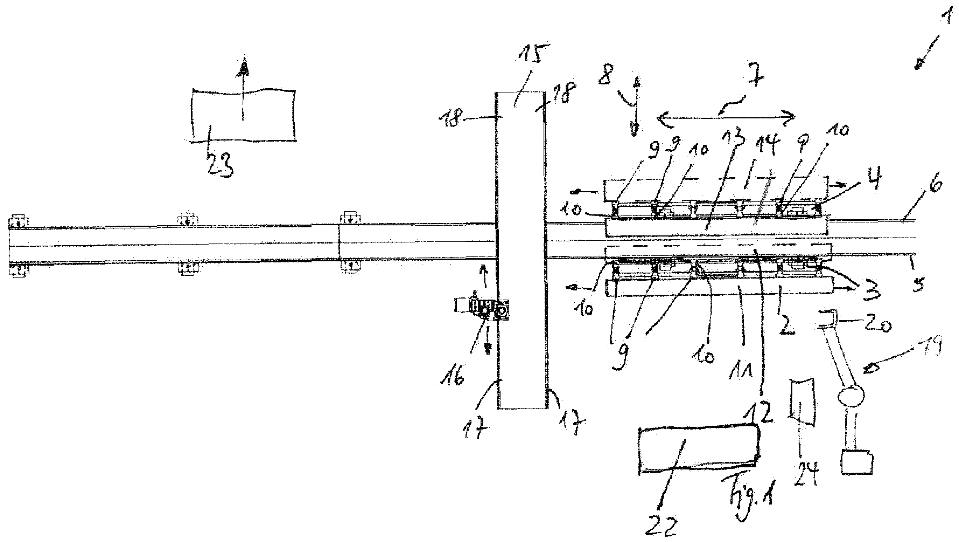

Die Figur 1 zeigt eine schematische Ansicht einer Bearbeitungsvorrichtung 1 zur Bearbeitung eines Werkstücks 2, insbesondere aus Holz, Kunststoff oder dergleichen.

Die Bearbeitungsvorrichtung 1 weist zwei Werkstücktische 3, 4 auf, die mittels Schienen 5, 6 in Längsrichtung 7 verfahrbar ausgestaltet und angeordnet sind. Dazu sind pro Werkstücktisch 3, 4 jeweils zumindest eine Vorschubeinrichtung vorgesehen, mittels welchen die Verlagerung und Positionierung in Längsrichtung erfolgt, welche jedoch nicht gezeigt sind. Die Vorrichtung 1 weist also einen ersten entlang der Längsrichtung 7 verlagerbaren Werkstücktisch 3 und einen zweiten in der Längsrichtung 7 verlagerbaren Werkstücktisch 4 auf, wobei die beiden Werkstücktische 3, 4 senkrecht zur Längsrichtung 7 beabstandet angeordnet sind. Dies ist vorteilhaft bereits dadurch bewirkt, dass die Schienen 5, 6 für die Führung der Werkstücktische 3, 4 in einer Richtung 8 senkrecht zur Längsrichtung 7 beabstandet angeordnet sind.

Jeder der beiden Werkstücktische 3, 4 weist Spannelemente 9, 10 zum Einspannen eines Werkstücks 2 auf. Dabei sind die Spannelemente 9, 10 entlang des Werkstücktischs 3, 4 in Längsrichtung 7 beabstandet zueinander angeordnet, um auch längere Werkstücke 2 sicher an mehreren Stellen spannen zu können.

Die Spannelemente 9, 10 sind dabei derart ausgebildet, dass sie zwei sich bezüglich der Längsrichtung 7 gegenüberliegende Einspannpositionen 11, 12, 13, 14 zum Einspannen eines Werkstücks 2 aufweisen, so dass in beiden Einspannpositionen 11, 12 bzw. 13, 14 ein Werkstück 2 einspannbar ist. Dabei kann ein Werkstück 2 pro Werkstücktisch 3, 4 in einer der Einspannpositionen 11, 12, 13, 14 eingespannt werden oder es können durchaus auch zwei Werkstücke 2 gleichzeitig in den beiden Einspannpositionen eines Werkstücktischs 3, 4 eingespannt werden.

Wenn dabei von einem Werkstück 2 die Rede ist, so können grundsätzlich auch mehrere Werkstücke 2 je Einspannposition 11, 12, 13, 14 in Längsrichtung 7 nebeneinander eingespannt werden, wenn die Länge der Werkstücke 2 entsprechend kurz ist und diese mehreren Werkstücke 2 dies erlauben.

Weiterhin ist ein Führungselement 15, wie ein Ausleger oder ein Portal, vorgesehen, welches senkrecht zur Längsrichtung 7 ausgerichtet angeordnet ist und zum verlagerbaren Führen eines Werkzeugelements 16 dient. Dazu weist das Führungselement 15 eine Art Schiene 17 auf, an welcher das Werkzeug 16 verlagerbar geführt ist. Die Schiene 17 ist an der einen und/oder an der anderen Längsseite 18 des Führungselements 15 angeordnet.

An diesem Führungselement 15 ist ein erstes Werkzeugelement 16 angeordnet und es ist mittels einer nicht dargestellten Vorschubeinrichtung entlang der Schiene 17 verlagerbar ausgebildet.

Das Werkzeugelement 16 ist beispielsweise ein Fräswerkzeug mit einem Fräsantrieb und einem Fräskopf zum Bearbeiten einer Längs- oder Schmalseite des Werkstücks. Auch kann das Werkzeugelement 16 ein Bohrkopf zum Bohren zumindest einer Bohrung sein.

Weiterhin ist eine erste Manipuliervorrichtung 19 vorzugsweise mit zumindest einem Greifer 20 oder mit einer Mehrzahl von Greifern 20 vorgesehen, zum Greifen und Positionieren eines Werkstücks 2 in zumindest ein Spannelement 9, 10 von einem der Werkstücktische 3, 4 oder zum Ausführen eines Werkstücks 2 aus zumindest einem Spannelement 9, 10 von einem der Werkstücktische 3, 4. Dabei kann die nur schematisch dargestellte Manipuliervorrichtung 19 eine Mehrzahl von Greifern 20 aufweisen, die in Längsrichtung 7 beabstandet zueinander angeordnet sind, um vorteilhaft auch lange Werkstücke 2 sicher greifen und positionieren zu können.

Diese Bearbeitungsvorrichtung erlaubt eine Einspannung eines Werkstücks 2 in einen der Werkstücktische 3, 4, so dass dieses Werkstück 2 mit dem Werkzeugelement 16 bearbeitet werden kann, während durchaus auch gleichzeitig ein anderes Werkstück 2 in dem anderen Werkstücktisch 4, 3 verfahren und von der Manipuliervorrichtung 19 umgesetzt, entnommen oder zugeführt werden kann. Dadurch können manche der Vorgänge gleichzeitig durchgeführt werden, was Zeit einspart.

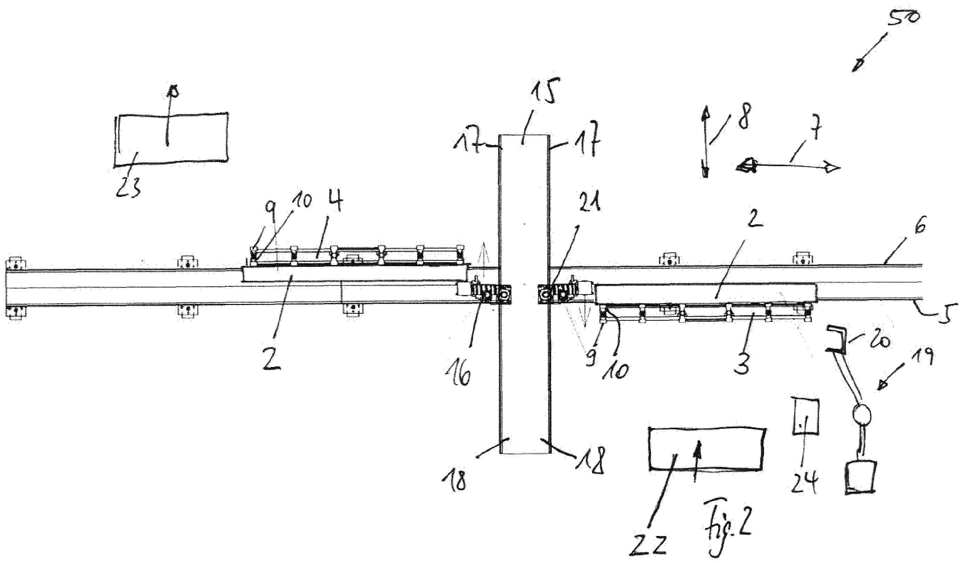

Die Figur 2 zeigt ein weiteres Ausführungsbeispiel einer Bearbeitungsvorrichtung 50, welche im Wesentlichen der Bearbeitungsvorrichtung 1 der Figur 1 entspricht, wobei weiterhin ein zweites Werkzeugelement 21 vorgesehen ist, welches an dem Führungselement 15 quer zur Längsrichtung 7 verlagerbar angeordnet ist. Das zweite Werkzeugelement 21 ist ebenso an dem Führungselement 15 zum Bearbeiten des Werkstücks 2 verlagerbar angeordnet. Es kann ebenso wie das erste Werkzeugelement ausgebildet sein, wie es oben beschrieben ist. Dadurch können auch gleichzeitig zwei Werkstücke 2 mittels den beiden Werkzeugelementen 16, 21 bearbeitet werden. Dabei sind das erste Werkzeugelement 16 und das zweite Werkzeugelement 21 in Längsrichtung 7 derart beabstandet voneinander an dem Führungselement 15 verlagerbar geführt, dass die Bearbeitung der Werkstücke kollisionsfrei vorgenommen werden kann und die beiden Werkzeugelemente 16, 21 unabhängig voneinander in Richtung 8 verfahrbar sind.

Entsprechend der Ausbildung der Manipuliervorrichtung 19 der Figuren 1 und 2 ist die Manipuliervorrichtung 19 derart ausgestaltet, dass mittels ihr ein Werkstück 2 von einer Werkstückzuführung 22, die nur schematisch angedeutet ist, aufnehmbar ist und einem der Werkstücktische 3, 4 in eine Einspannposition 11, 12, 13, 14 in zumindest ein Spannelement 9, 10 zuführbar ist, oder dass mittels ihr ein Werkstück 2 aus einer ersten Einspannposition 11, 12, 13, 14 in zumindest einem ersten Spannelement 9, 10 in eine zweite Einspannposition 11, 12, 13, 14 in zumindest einem zweiten Spannelement 9, 10 umsetzbar ist, oder mittels ihr ein Werkstück 2 von einer Einspannposition 11, 12, 13, 14 in zumindest einem Spannelement 9, 10 zu einer Werkstückabführung 23, die ebenfalls nur schematisch dargestellt ist, ausführbar ist.

Dabei ist die Manipuliervorrichtung 19 auch in vorteilhafter Weiterbildung derart ausgestaltet, dass mittels ihr ein Werkstück 2 zu zumindest einem Werkzeugelement 24 zur Bearbeitung des Werkstücks 2 zuführbar ist. Das Werkzeugelement 24 kann dabei als Zusatzaggregat beispielsweise auch raumfest und unbeweglich angeordnet sein, um beispielsweise Bohrungen vorzunehmen.

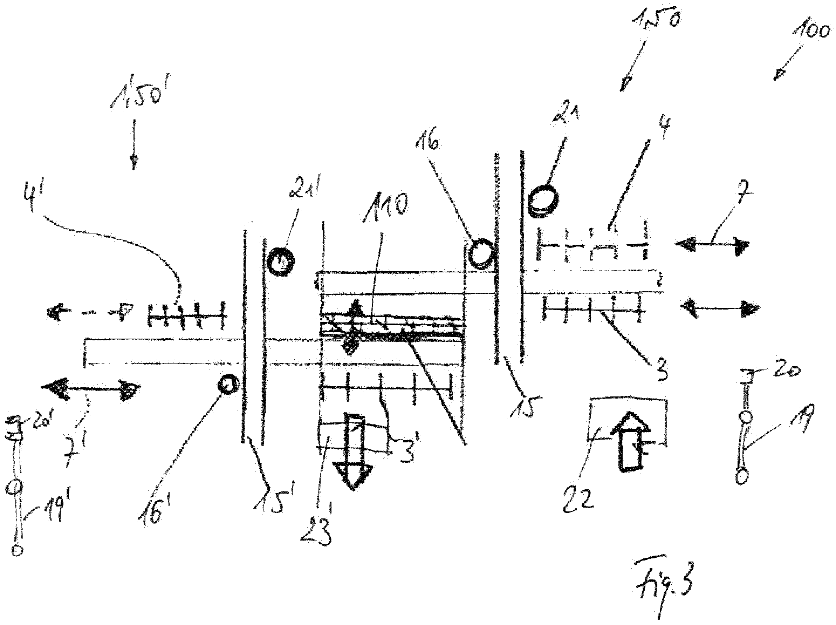

Die Figur 3 zeigt in einer schematischen Darstellung eine Bearbeitungsvorrichtung 100, die im Wesentlichen als Anordnung zweier Bearbeitungsvorrichtungen 1 bzw. 50 gemäß der Figuren 1 und 2 ausgebildet ist. Dabei können zwei Bearbeitungsvorrichtungen 1 oder zwei Bearbeitungsvorrichtungen 50 oder jeweils eine Bearbeitungsvorrichtung 1 und eine Bearbeitungsvorrichtung 50 vorgesehen sein. Die Bearbeitungsvorrichtung 100 ist somit in Ergänzung der Bearbeitungsvorrichtungen 1 oder 50 mit zumindest einem dritten entlang einer Längsrichtung verlagerbaren Werkstücktisch 3' und insbesondere mit einem vierten in der Längsrichtung verlagerbaren Werkstücktisch 4' ausgebildet, wobei die beiden dritten und vierten Werkstücktische 3', 4' senkrecht zur Längsrichtung 7' beabstandet angeordnet sind.

Dabei ist wiederum jeder der beiden dritten und vierten Werkstücktische 3', 4' mit zumindest einem Spannelement oder mit Spannelementen zum Einspannen eines Werkstücks 2 ausgebildet, wie dies zu den Figuren 1, 2 bereits beschrieben ist.

Weiterhin ist ein zweites Führungselement 15' vorgesehen, welches senkrecht zur Längsrichtung ausgerichtet angeordnet ist und zum verlagerbaren Führen zumindest eines Werkzeugelements 16', 21' dient.

Weiterhin kann optional eine weitere Manipuliervorrichtung 19' mit zumindest einem Geifer 20' entsprechend der Manipuliervorrichtung 19 vorgesehen sein. Allerdings kann die zweite Manipuliervorrichtung 19' auch durch die erste Manipuliervorrichtung 19 ersetzt sein, welche die entsprechenden Vorgänge durchführt.

Die zweite Manipuliervorrichtung 19' ist derart ausgestaltet, dass mittels ihr ein Werkstück 2 von einer Werkstückzuführung 22 aufnehmbar ist und einem der dritten und vierten Werkstücktische 3', 4' in eine Einspannposition in zumindest ein Spannelement zuführbar ist, oder dass mittels ihr ein Werkstück aus einer ersten Einspannposition in zumindest einem ersten Spannelement in eine zweite Einspannposition in zumindest einem zweiten Spannelement umsetzbar ist, oder mittels ihr ein Werkstück von einer Einspannposition in zumindest einem Spannelement zu einer Werkstückabführung ausführbar ist.

Die Figur 3 zeigt, dass eine dritte Manipuliervorrichtung 110 vorgesehen ist, welche derart ausgestaltet ist, dass mittels ihr ein Werkstück von einem der ersten oder zweiten Werkstücktische 3, 4 zu einem der dritten oder vierten Werkstücktische 3', 4' zuführbar ist oder dass mittels ihr ein Werkstück von einem der dritten oder vierten Werkstücktische 3', 4' zu einem der zweiten oder dritten Werkstücktische 3, 4 zuführbar ist. Die Manipuliervorrichtung 110 kann auch zum Abführen eines Werkstücks dienen.

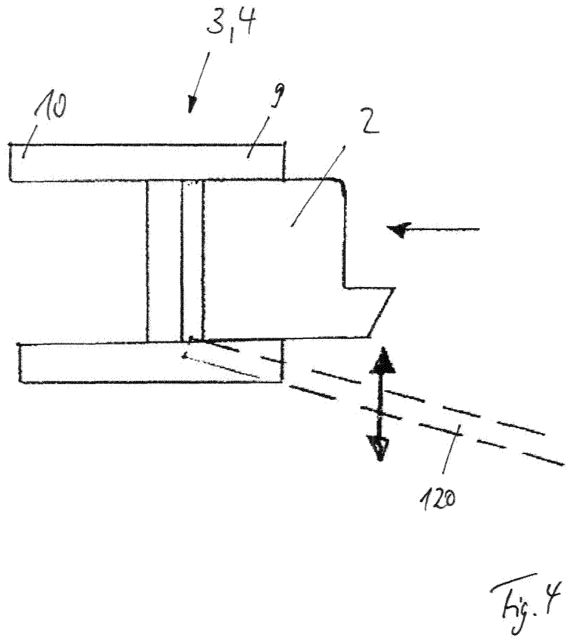

Die Figur 4 zeigt in einer schematischen Darstellung einen Teil eines Werkstücktischs 3, 4 mit den Spannelementen 9, 10, in welche ein Werkstück 2 eingespannt ist. Die Werkstückabführung 120 ist dabei als Art Rutsche für das Werkstück 2 ausgebildet, auf welche ein Werkstück 2 absetzbar ist, so dass es rutschend abgeführt wird. Dazu kann das entsprechende Spannelement geöffnet werden, so dass das Werkstück 2 auf die Rutsche fällt und dadurch rutschend angeführt wird.

Die gemäß den Figuren schematisch dargestellten Bearbeitungsvorrichtungen 1, 50, 100 erlauben ein Verfahren zum Betreiben einer Bearbeitungsvorrichtung zum Bearbeiten eines Werkstücks 2, wobei ein Werkstück 2 in einer Einspannposition von einem der Werkstücktische 3, 4, 3',4' von einem Werkzeugelement 16, 21, 16', 21' bearbeitbar ist, wobei im Wesentlichen zeitgleich dazu ein weiteres Werkstück 2 von einer Manipuliervorrichtung 19, 19' aus einem der Werkstücktische 3, 4, 3', 4' entnehmbar oder einem der Werkstücktische 3, 4, 3', 4' zuführbar oder in einem der Werkstücktische 3, 4, 3', 4' von einer Einspannposition in eine andere Einspannposition umsetzbar ist oder von einem der Werkstücktische 3, 4, 3', 4' von einer Einspannposition in eine andere Einspannposition eines anderen Werkstücktisches 3, 4, 3', 4' umsetzbar ist oder ein weiteres Werkstück 2 in einer Einspannposition eines der anderen Werkstücktische 3, 4, 3', 4' mittels eines anderen Werkzeugelements bearbeitbar ist.

Bei den oben gezeigten und beschriebenen Bearbeitungsvorrichtungen sind jeweils zwei oder vier Werkstücktische angeordnet, die wiederum paarweise mittels Schienen benachbart angeordnet sind. Alternativ dazu können auch mehr als zwei Werkstücktische benachbart zueinander und mittels Schienen in Längsrichtung verlagerbar angeordnet sein. Entsprechend können auch an den Führungsvorrichtungen mehr als zwei Werkzeugelemente angeordnet sein, wie insbesondere je ein Werkzeugelement je Werkstücktisch.

### Bezugszeichenliste

- 1: Bearbeitungsvorrichtung
- 2: Werkstück
- 3, 3': Werkstücktisch
- 4, 4': Werkstücktisch
- 5: Schiene
- 6: Schiene
- 7, 7': Längsrichtung
- 8: Richtung
- 9: Spannelement
- 10: Spannelement
- 11: Einspannposition
- 12: Einspannposition
- 13: Einspannposition
- 14: Einspannposition
- 15,15': Führungselement
- 16,16': Werkzeugelement
- 17: Schiene
- 18: Längsseite
- 19,19': Manipuliervorrichtung
- 20: Greifer
- 21, 21': Werkzeugelement
- 22: Werkstückzuführung
- 23: Werkstückabführung
- 24: Werkzeugelement
- 50: Bearbeitungsvorrichtung
- 100: Bearbeitungsvorrichtung
- 110: Manipuliervorrichtung
- 120: Werkstückabführung

## Patentansprüche

1. Bearbeitungsvorrichtung (1,50,100) für Werkstücke (2), insbesondere aus Holz, Kunststoff oder dergleichen, mit einem ersten entlang einer Längsrichtung (7) verlagerbaren Werkstücktisch (3) und mit einem zweiten in der Längsrichtung (7) verlagerbaren Werkstücktisch (4), wobei die beiden Werkstücktische (3,4) senkrecht zur Längsrichtung (7) beabstandet angeordnet sind, wobei jeder der beiden Werkstücktische (3,4) Spannelemente (9,10) zum Einspannen eines Werkstücks (2) aufweisen, wobei die Spannelemente (9,10) des ersten und des zweiten Werkstücktisches derart ausgebildet sind, dass sie zwei sich bezüglich der Längsrichtung (7) gegenüberliegende Einspannpositionen (11,12,13,14) zum Einspannen eines Werkstücks (2) aufweisen, so dass in jeweils beiden Einspannpositionen (11,12,13,14) ein Werkstück (2) einspannbar ist, und wobei weiterhin ein Führungselement (15) vorgesehen ist, welches senkrecht zur Längsrichtung (7) ausgerichtet angeordnet ist und zum verlagerbaren Führen eines Werkzeugelements (16) dient, mit einem ersten Werkzeugelement (16), welches an dem Führungselement (15) verlagerbar angeordnet ist, zum Bearbeiten des Werkstücks (2), mit einer ersten Manipuliervorrichtung (19) zum Greifen und Positionieren eines Werkstücks (2) in zumindest ein Spannelement (9,10) von einem der Werkstücktische (3,4) oder zum Ausführen eines Werkstücks (2) aus zumindest einem Spannelement (9,10) von einem der Werkstücktische (3,4), **dadurch gekennzeichnet, dass** zumindest ein dritter entlang einer Längsrichtung (7') verlagerbarer Werkstücktisch (3') und insbesondere ein vierter in der Längsrichtung (7') verlagerbarer Werkstücktisch (4') vorgesehen ist, wobei der dritte und gegebenenfalls der vierte Werkstücktisch (3',4') senkrecht zur Längsrichtung (7') beabstandet angeordnet sind, wobei der dritte und gegebenenfalls der vierte Werkstücktisch (3',4') Spannelemente (9,10) zum Einspannen eines Werkstücks (2) aufweisen, wobei die Spannelemente (9,10) des dritten und insbesondere des vierten Werkstücktisches derart ausgebildet sind, dass sie jeweils zwei sich bezüglich der Längsrichtung (7') gegenüberliegende Einspannpositionen (11,12,13,14) zum Einspannen eines Werkstücks (2) aufweisen, so dass in beiden Einspannpositionen (11,12,13,14) ein Werkstück (2) einspannbar ist, und wobei weiterhin ein zweites Führungselement (15') vorgesehen ist, welches senkrecht zur Längsrichtung (7') ausgerichtet angeordnet ist und zum verlagerbaren Führen zumindest eines Werkzeugelements (16',21') dient, mit einem dritten Werkzeugelement (16'), welches an dem zweiten Führungselement (15') verlagerbar angeordnet ist, zum Bearbeiten des Werkstücks (2), mit der ersten Manipuliervorrichtung (19) oder einer zweiten Manipuliervorrichtung (19') zum Greifen und Positionieren eines Werkstücks (2) in zumindest ein Spannelement von dem dritten oder gegebenenfalls dem vierten Werkstücktisch (3',4') oder zum Ausführen eines Werkstücks aus zumindest einem Spannelement von dem dritten oder gegebenenfalls vierten Werkstücktisch (3',4').

2. Bearbeitungsvorrichtung (1,50,100) nach Anspruch 1, **dadurch gekennzeichnet, dass** ein zweites Werkzeugelement (21) vorgesehen ist, welches an dem ersten Führungselement (15) verlagerbar angeordnet ist, zum Bearbeiten des Werkstücks (2).

3. Bearbeitungsvorrichtung (1,50,100) nach Anspruch 2, **dadurch gekennzeichnet, dass** das erste Werkzeugelement (16) und das zweite Werkzeugelement (21) in Längsrichtung (7) beabstandet voneinander an dem ersten Führungselement (15) verlagerbar geführt sind.

4. Bearbeitungsvorrichtung (1,50,100) nach Anspruch 2, **dadurch gekennzeichnet, dass** das erste Werkzeugelement (16) und das zweite Werkzeugelement (21) in Längsrichtung (7) auf gleicher Höhe an dem Führungselement (15) verlagerbar geführt sind.

5. Bearbeitungsvorrichtung (1,50,100) nach einem der vorhergehenden Ansprüche 2 bis 4 **dadurch gekennzeichnet, dass** das erste Führungselement (15) ein Portal oder ein Ausleger ist, an welchem das erste und/oder das zweite Werkzeugelement (16,21) verlagerbar geführt sind.

6. Bearbeitungsvorrichtung (1,50,100) nach einem der vorhergehenden Ansprüche, **dadurch gekennzeichnet, dass** die erste Manipuliervorrichtung (19) derart ausgestaltet ist, dass mittels ihr ein Werkstück (2) von einer Werkstückzuführung (22) aufnehmbar ist und einem der Werkstücktische (3,4) in eine Einspannposition (11,12,13,14) in zumindest ein Spannelement (9,10) zuführbar ist, oder dass mittels ihr ein Werkstück (2) aus einer ersten Einspannposition (11,12,13,14) in zumindest einem ersten Spannelement (9,10) in eine zweite Einspannposition (11,12,13,14) in zumindest einem zweiten Spannelement (9,10) umsetzbar ist, oder mittels ihr ein Werkstück (2) von einer Einspannposition (11,12,13,14) in zumindest einem Spannelement (9,10) zu einer Werkstückabführung (23) ausführbar ist.

7. Bearbeitungsvorrichtung (1,50,100) nach Anspruch 6, **dadurch gekennzeichnet, dass** die erste Manipuliervorrichtung (19) derart ausgestaltet ist, dass mittels ihr ein Werkstück (2) zu zumindest einem Werkzeugelement (24) zur Bearbeitung des Werkstücks (2) zuführbar ist.

8. Bearbeitungsvorrichtung (100) nach einem der Ansprüche 1 bis 7, **dadurch gekennzeichnet, dass** ein viertes Werkzeugelement (21') vorgesehen ist, welches an dem zweiten Führungselement (15') verlagerbar angeordnet ist, zum Bearbeiten des Werkstücks (2).

9. Bearbeitungsvorrichtung (100) nach Anspruch 8, **dadurch gekennzeichnet, dass** das dritte Werkzeugelement (16') und das vierte Werkzeugelement (21') in Längsrichtung (7') beabstandet voneinander an dem zweiten Führungselement (15') verlagerbar geführt sind.

10. Bearbeitungsvorrichtung (100) nach einem der vorhergehenden Ansprüche 8 bis 9, **dadurch gekennzeichnet, dass** das zweite Führungselement (15') ein Portal oder ein Ausleger ist, an welchem das dritte und/oder das vierte Werkzeugelement verlagerbar geführt sind.

11. Bearbeitungsvorrichtung (100) nach einem der vorhergehenden Ansprüche 1 bis 10, **dadurch gekennzeichnet, dass** die zweite Manipuliervorrichtung (19') derart ausgestaltet ist, dass mittels ihr ein Werkstück von einer Werkstückzuführung aufnehmbar ist und einem der dritten und vierten Werkstücktische in eine Einspannposition in zumindest ein Spannelement zuführbar ist, oder dass mittels ihr ein Werkstück aus einer ersten Einspannposition in zumindest einem ersten Spannelement in eine zweite Einspannposition in zumindest einem zweiten Spannelement umsetzbar ist, oder mittels ihr ein Werkstück von einer Einspannposition in zumindest einem Spannelement zu einer Werkstückabführung ausführbar ist.

12. Bearbeitungsvorrichtung (100) nach einem der vorhergehenden Ansprüche 1 bis 11, **dadurch gekennzeichnet, dass** eine dritte Manipuliervorrichtung (110) vorgesehen ist, welche derart ausgestaltet ist, dass mittels ihr ein Werkstück von einem der ersten oder zweiten Werkstücktische zu einem der dritten oder vierten Werkstücktische zuführbar ist oder dass mittels ihr ein Werkstück von einem der dritten oder vierten Werkstücktische zu einem der zweiten oder dritten Werkstücktische zuführbar ist, oder dass mittels ihr ein Werkstück aus einer ersten Einspannposition in zumindest einem ersten Spannelement in eine zweite Einspannposition in zumindest einem zweiten Spannelement umsetzbar ist, oder mittels ihr ein Werkstück von einer Einspannposition in zumindest einem Spannelement zu einer Werkstückabführung ausführbar ist.

13. Bearbeitungsvorrichtung (100) nach einem der vorhergehenden Ansprüche, **dadurch gekennzeichnet, dass** die Werkstückabführung (120) eine Rutsche für das Werkstück (2) enthält, auf welche ein Werkstück absetzbar ist, so dass es abgeführt wird.

14. Verfahren zum Betreiben einer Bearbeitungsvorrichtung (1,50,100) nach einem der vorhergehenden Ansprüche, zum Bearbeiten eines Werkstücks, wobei ein Werkstück in einer Einspannposition von einem der Werkstücktische von einem Werkzeugelement bearbeitbar ist, wobei im Wesentlichen zeitgleich dazu ein weiteres Werkstück von einer Manipuliervorrichtung aus einem der Werkstücktische entnehmbar oder einem der Werkstücktische zuführbar oder in einem der Werkstücktische von einer Einspannposition in eine andere Einspannposition umsetzbar ist oder von einem der Werkstücktische von einer Einspannposition in eine andere Einspannposition eines anderen Werkstücktisches umsetzbar ist oder ein weiteres Werkstück in einer Einspannposition eines der anderen Werkstücktische mittels eines anderen Werkzeugelements bearbeitbar ist.

## Claims

1. A machining device (1, 50, 100) for workpieces (2), in particular made of wood, plastic or the like, with a first workpiece table (3) which is shiftable along a longitudinal direction (7) and with a second workpiece table (4) which is shiftable in the longitudinal direction (7), wherein the two workpiece tables (3, 4) are arranged spaced apart perpendicularly to the longitudinal direction (7), wherein each of the two workpiece tables (3, 4) has clamping elements (9, 10) for clamping a workpiece (2), wherein the clamping elements (9, 10) of the first and the second workpiece table are designed in such a manner that they have two clamping positions (11, 12, 13, 14) facing each other with respect to the longitudinal direction (7) for clamping a workpiece (2), so that a workpiece (2) can be clamped in the respective two clamping positions (11, 12, 13, 14), and wherein furthermore a guide element (15) is provided which is arranged oriented perpendicularly to the longitudinal direction (7) and serves for the shiftable guiding of a tool element (16), with a first tool element (16) which is arranged shiftably on the guide element (15), for machining the workpiece (2), with a first manipulator device (19) for gripping and positioning a workpiece (2) in at least one clamping element (9, 10) of one of the workpiece tables (3, 4) or for removing a workpiece (2) from at least one clamping element (9, 10) of one of the workpiece tables (3, 4), **characterised in that** at least one third workpiece table (3') which is shiftable along a longitudinal direction (7') and in particular a fourth workpiece table (4') which is shiftable in the longitudinal direction (7') is provided, wherein the third and possibly the fourth workpiece table (3', 4') are arranged spaced apart perpendicularly to the longitudinal direction (7'), wherein the third and possibly the fourth workpiece table (3', 4') have clamping elements (9, 10) for clamping a workpiece (2), wherein the clamping elements (9, 10) of the third and in particular of the fourth workpiece table are designed in such a manner that they have two respective clamping positions (11, 12, 13, 14) facing each other with respect to the longitudinal direction (7') for clamping a workpiece (2), so that a workpiece (2) can be clamped in the two clamping positions (11, 12, 13, 14), and wherein furthermore a second guide element (15') is provided which is arranged oriented perpendicularly to the longitudinal direction (7') and serves for the shiftable guiding of at least one tool element (16', 21'), with a third tool element (16') which is arranged shiftably on the second guide element (15'), for machining the workpiece (2), with the first manipulator device (19) or a second manipulator device (19') for gripping and positioning a workpiece (2) in at least one clamping element of the third or possibly the fourth workpiece table (3', 4') or for removing a workpiece from at least one clamping element of the third or possibly the fourth workpiece table (3', 4').

2. The machining device (1, 50, 100) as claimed in claim 1, **characterised in that** a second tool element (21) is provided which is arranged shiftably on the first guide element (15), for machining the workpiece (2).

3. The machining device (1, 50, 100) as claimed in claim 2, **characterised in that** the first tool element (16) and the second tool element (21) are guided shiftably on the first guide element (15) in a manner spaced apart from each other in the longitudinal direction (7) .

4. The machining device (1, 50, 100) as claimed in claim 2, **characterised in that** the first tool element (16) and the second tool element (21) are guided shiftably on the guide element (15) at the same height in the longitudinal direction (7).

5. The machining device (1, 50, 100) as claimed in one of the preceding claims 2 to 4, **characterised in that** the first guide element (15) is a gantry or an extension arm on which the first and/or the second tool element (16, 21) are shiftably guided.

6. The machining device (1, 50, 100) as claimed in one of the preceding claims, **characterised in that** the first manipulator device (19) is configured in such a manner that by means of the latter a workpiece (2) can be picked up from a workpiece feed (22) and can be supplied to one of the workpiece tables (3, 4) into a clamping position (11, 12, 13, 14) in at least one clamping element (9, 10), or **in that** by means of said manipulator device a workpiece (2) can be moved from a first clamping position (11, 12, 13, 14) in at least one first clamping element (9, 10) into a second clamping position (11, 12, 13, 14) in at least one second clamping element (9, 10), or by means of said manipulator device a workpiece (2) can be removed from a clamping position (11, 12, 13, 14) in at least one clamping element (9, 10) to a workpiece-removing means (23).

7. The machining device (1, 50, 100) as claimed in claim 6, **characterised in that** the first manipulator device (19) is configured in such a manner that by means of the latter a workpiece (2) can be supplied to at least one tool element (24) for machining the workpiece (2).

8. The machining device (100) as claimed in one of claims 1 to 7, **characterised in that** a fourth tool element (21') is provided which is arranged shiftably on the second guide element (15'), for machining the workpiece (2).

9. The machining device (100) as claimed in claim 8, **characterised in that** the third tool element (16') and the fourth tool element (21') are guided shiftably on the second guide element (15') in a manner spaced apart from each other in the longitudinal direction (7').

10. The machining device (100) as claimed in one of the preceding claims 8 to 9, **characterised in that** the second guide element (15') is a gantry or an extension arm on which the third and/or the fourth tool element (16', 21') are shiftably guided.

11. The machining device (100) as claimed in one of the preceding claims 1 to 10, **characterised in that** the second manipulator device (19') is configured in such a manner that by means of the latter a workpiece can be picked up from a workpiece feed and can be supplied to either the third or fourth workpiece table in a clamping position in at least one clamping element, or **in that** by means of said manipulator device a workpiece can be moved from a first clamping position in at least one first clamping element into a second clamping position in at least one second clamping element, or by means of said manipulator device a workpiece can be removed from a clamping position in at least one clamping element to a workpiece-removing means.

12. The machining device (100) as claimed in one of the preceding claims 1 to 11, **characterised in that** a third manipulator device (110) is provided which is configured in such a manner that by means of the latter a workpiece from either the first or second workpiece table can be supplied to either the third or fourth workpiece table, or **in that** by means of said manipulator device a workpiece from either the third or fourth workpiece table can be supplied to either the second or third workpiece table, or **in that** by means of said manipulator device a workpiece can be moved from a first clamping position in at least one first clamping element into a second clamping position in at least one second clamping element, or by means of said manipulator device a workpiece can be removed from a clamping position in at least one clamping element to a workpiece-removing means.

13. The machining device (100) as claimed in one of the preceding claims, **characterised in that** the workpiece-removing means (120) contains a chute for the workpiece (2), onto which chute a workpiece can be deposited such that it is removed.

14. A method for operating a machining device (1, 50, 100) as claimed in one of the preceding claims, for machining a workpiece, wherein a workpiece can be machined in a clamping position of one of the workpiece tables by a tool element, wherein substantially isochronously therewith a further workpiece can be removed from one of the workpiece tables or can be supplied to one of the workpiece tables or can be moved in one of the workpiece tables from one clamping position into another clamping position, or can be moved from one of the workpiece tables from one clamping position into another clamping position of another workpiece table by a manipulator device, or a further workpiece can be machined in a clamping position of one of the other workpiece tables by means of another tool element.

## Revendications

1. Dispositif d'usinage (1, 50, 100) pour des pièces à usiner (2), pièces en particulier en bois, en matière plastique ou autres matériaux analogues, ledit dispositif d'usinage comprenant une première table porte-pièces (3) pouvant être déplacée le long d'une première direction longitudinale (7) et comprenant une deuxième table porte-pièces (4) pouvant être déplacée dans la direction longitudinale (7), où les deux tables porte-pièces (3, 4) sont disposées en étant espacées et perpendiculaires à la direction longitudinale (7), où chacune des deux tables porte-pièces (3, 4) présente des éléments de serrage (9, 10) servant au serrage d'une pièce à usiner (2), où les éléments de serrage (9, 10) de la première et de la deuxième table porte-pièces sont conçus de manière telle, qu'ils présentent deux positions de serrage opposées (11, 12, 13, 14) par rapport à la direction longitudinale (7), lesdites positions servant au serrage d'une pièce à usiner (2), de sorte qu'une pièce à usiner (2) peut à chaque fois être serrée dans les deux positions de serrage (11, 12, 13, 14), et où il est prévu en outre un élément de guidage (15) qui est disposé en étant orienté perpendiculairement à la direction longitudinale (7) et qui sert au guidage mobile d'un élément d'outil (16), ledit dispositif d'usinage comprenant un premier élément d'outil (16) qui est disposé en pouvant être déplacé sur l'élément de guidage (15) et qui sert à l'usinage de la pièce à usiner (2), comprenant un premier dispositif de manipulation (19) servant à la préhension et au positionnement d'une pièce à usiner (2) dans au moins un élément de serrage (9, 10) de l'une des tables porte-pièces (3, 4), ou bien servant à la réalisation d'une pièce à usiner (2) provenant au moins d'un élément de serrage (9, 10) de l'une des tables porte-pièces (3, 4), **caractérisé en ce qu'**il est prévu au moins une troisième table porte-pièces (3') pouvant être déplacée le long d'une direction longitudinale (7') et, en particulier, une quatrième table porte-pièces (4') pouvant être déplacée dans la direction longitudinale (7'), où la troisième et, le cas échéant, la quatrième table porte-pièces (3', 4') sont disposées en étant espacées et perpendiculaires à la direction longitudinale (7'), où la troisième et, le cas échéant, la quatrième table porte-pièces (3', 4') présentent des éléments de serrage (9, 10) servant au serrage d'une pièce à usiner (2), où les éléments de serrage (9, 10) de la troisième et, en particulier, de la quatrième table porte-pièces sont conçus de manière telle, qu'ils présentent à chaque fois deux positions de serrage opposées (11, 12, 13, 14) par rapport à la direction longitudinale (7'), lesdites positions servant au serrage d'une pièce à usiner (2), de sorte qu'une pièce à usiner (2) peut être serrée dans les deux positions de serrage (11, 12, 13, 14), et où il est prévu en outre un deuxième élément de guidage (15') qui est disposé en étant orienté perpendiculairement à la direction longitudinale (7') et qui sert au guidage mobile d'au moins un élément d'outil (16', 21'), ledit dispositif d'usinage comprenant un troisième élément d'outil (16') qui est disposé en pouvant être déplacé sur le deuxième élément de guidage (15') et qui sert à l'usinage de la pièce à usiner (2), comprenant le premier dispositif de manipulation (19) ou un deuxième dispositif de manipulation (19') servant à la préhension et au positionnement d'une pièce à usiner (2) dans au moins un élément de serrage de la troisième ou, le cas échéant, de la quatrième table porte-pièces (3', 4'), ou bien servant à la réalisation d'une pièce à usiner provenant au moins d'un élément de serrage de la troisième ou, le cas échéant, de la quatrième table porte-pièces (3', 4').

2. Dispositif d'usinage (1, 50, 100) selon la revendication 1, **caractérisé en ce qu'**il est prévu un deuxième élément d'outil (21) qui est disposé en pouvant être déplacé sur le premier élément de guidage (15) et qui sert à l'usinage de la pièce à usiner (2).

3. Dispositif d'usinage (1, 50, 100) selon la revendication 2, **caractérisé en ce que** le premier élément d'outil (16) et le deuxième élément d'outil (21) sont guidés en pouvant être déplacés sur le premier élément de guidage (15), en étant espacés l'un de l'autre dans la direction longitudinale (7).

4. Dispositif d'usinage (1, 50, 100) selon la revendication 2, **caractérisé en ce que** le premier élément d'outil (16) et le deuxième élément d'outil (21) sont guidés en pouvant être déplacés sur l'élément de guidage (15), en étant à la même hauteur dans la direction longitudinale (7).

5. Dispositif d'usinage (1, 50, 100) selon l'une quelconque des revendications 2 à 4, **caractérisé en ce que** le premier élément de guidage (15) est un portique ou un bras de potence au niveau duquel sont guidés le premier et / ou le deuxième élément d'outil (16, 21), en étant déplaçables.

6. Dispositif d'usinage (1, 50, 100) selon l'une quelconque des revendications précédentes, **caractérisé en ce que** le premier dispositif de manipulation (19) est conçu de manière telle, qu'au moyen de celui-ci, une pièce à usiner (2) provenant d'une alimentation en pièces à usiner (22) puisse être réceptionnée et qu'elle puisse être amenée à l'une des tables porte-pièces (3, 4) dans au moins un élément de serrage (9, 10) se trouvant dans une position de serrage (11, 12, 13, 14), ou bien, au moyen dudit dispositif de manipulation, qu'une pièce à usiner (2) puisse passer d'une première position de serrage (11, 12, 13, 14) dans au moins un premier élément de serrage (9, 10), à une deuxième position de serrage (11, 12, 13, 14) dans au moins un deuxième élément de serrage (9, 10), ou bien, au moyen dudit dispositif de manipulation, qu'il soit possible qu'une pièce à usiner (2) passe d'une position de serrage (11, 12, 13, 14) dans au moins un élément de serrage (9, 10), à une évacuation des pièces à usiner (23).

7. Dispositif d'usinage (1, 50, 100) selon la revendication 6, **caractérisé en ce que** le premier dispositif de manipulation (19) est conçu de manière telle, qu'au moyen de celui-ci, une pièce à usiner (2) puisse être amenée à au moins un élément d'outil (24) servant à l'usinage de la pièce à usiner (2).

8. Dispositif d'usinage (100) selon l'une quelconque des revendications 1 à 7, **caractérisé en ce qu'**il est prévu un quatrième élément d'outil (21') qui est disposé en pouvant être déplacé sur le deuxième élément de guidage (15') et qui sert à l'usinage de la pièce à usiner (2).

9. Dispositif d'usinage (100) selon la revendication 8, **caractérisé en ce que** le troisième élément d'outil (16') et le quatrième élément d'outil (21') sont guidés en pouvant être déplacés sur le deuxième élément de guidage (15') et en étant espacés l'un de l'autre dans la direction longitudinale (7').

10. Dispositif d'usinage (100) selon l'une des revendications précédentes 8 à 9, **caractérisé en ce que** le deuxième élément de guidage (15') est un portique ou un bras de potence au niveau duquel sont guidés le troisième et / ou le quatrième élément d'outil (16', 21'), en étant déplaçables.

11. Dispositif d'usinage (100) selon l'une quelconque des revendications précédentes 1 à 10, **caractérisé en ce que** le deuxième dispositif de manipulation (19') est conçu de manière telle, qu'au moyen de celui-ci, une pièce à usiner provenant d'une alimentation en pièces à usiner puisse être réceptionnée et puisse être amenée à l'une des troisième et quatrième tables porte-pièces dans au moins un élément de serrage se trouvant dans une position de serrage, ou bien, au moyen dudit dispositif de manipulation, qu'une pièce à usiner puisse passer d'une première position de serrage dans au moins un premier élément de serrage, à une deuxième position de serrage dans au moins un deuxième élément de serrage, ou bien, au moyen dudit dispositif de manipulation, qu'il soit possible qu'une pièce à usiner passe d'une position de serrage dans au moins un élément de serrage, à une évacuation des pièces d'usinage.

12. Dispositif d'usinage (100) selon l'une quelconque des revendications précédentes 1 à 11, **caractérisé en ce qu'**il est prévu un troisième dispositif de manipulation (110) qui est conçu de manière telle, qu'au moyen de celui-ci, une pièce à usiner provenant de l'une des première ou deuxième tables porte-pièces puisse être amenée à l'une des troisième ou quatrième tables porte-pièces, ou bien, au moyen dudit dispositif de manipulation, qu'une pièce à usiner provenant de l'une des troisième ou quatrième tables porte-pièces puisse être amenée à l'une des deuxième ou troisième tables porte-pièces, ou bien, au moyen dudit dispositif de manipulation, qu'une pièce à usiner puisse passer d'une première position de serrage dans au moins un premier élément de serrage, à une deuxième position de serrage dans au moins un deuxième élément de serrage, ou bien, au moyen dudit dispositif de manipulation, qu'il soit possible qu'une pièce à usiner puisse passer d'une position de serrage dans au moins un élément de serrage, à une évacuation des pièces à usiner.

13. Dispositif d'usinage (100) selon l'une quelconque des revendications précédentes, **caractérisé en ce que** l'évacuation des pièces à usiner (120) comprend un plan incliné pour la pièce à usiner (2), plan incliné sur lequel une pièce à usiner peut être déposée, de sorte qu'elle est évacuée.

14. Procédé de fonctionnement d'un dispositif d'usinage (1, 50, 100) selon l'une quelconque des revendications précédentes, ledit dispositif servant à l'usinage d'une pièce à usiner, où une pièce à usiner peut être usinée par un élément d'outil, dans une position de serrage de l'une des tables porte-pièces, où, pratiquement en même temps que cet usinage, une autre pièce à usiner peut être retirée, par un dispositif de manipulation, de l'une des tables porte-pièces, ou bien peut être amenée à l'une des tables porte-pièces, ou bien peut passer, dans l'une des tables porte-pièces, d'une position de serrage à une autre position de serrage, ou bien peut passer d'une position de serrage de l'une des tables porte-pièces, à une autre position de serrage d'une autre table porte-pièces, ou bien une autre pièce à usiner peut être usinée au moyen d'un autre élément d'outil, dans une position de serrage de l'une des autres tables porte-pièces.
